# EUROPEAN PATENT APPLICATION

(11) **EP 4 339 652 A1**
(43) Date of publication of application: **20.03.2024**
(21) Application number: 23197470.0
(22) Date of filing: 14.09.2023
(51) Int. Cl.: G01V 1/38

(54) **NEGATIVE OFFSET INTERLEAVED HIGH RESOLUTION SYSTEM FOR SEISMIC SURVEYS**

(30) Priority: 15.09.2022 NO 20220985
(71) Applicant: Neomare AS, 2000 Lillestrøm (NO)
(72) Inventor: Graham, Knight, TN15 8SP SEVENOAKS (NO)
(74) Representative: Onsagers AS

(57) **Abstract**

A system and method for arrangement of seismic streamers in relation to seismic sources in marine seismic surveys using towed streamers is disclosed. The arrangement aims to achieve negative offset or near zero offset data during seismic surveys to achieve higher resolution survey results and accurate geographical modelling.

## Description

### FIELD OF THE INVENTION

The invention relates to Marine Seismic Surveys and more particularly to obtaining negative offset or near zero offset high-resolution system in towed Marine Seismic Surveys.

### BACKGROUND

Seismic Surveys are widely employed to perform characterization of subterrain elements in geological regions of interest. For example, in searching for oil or gas, the seismic exploration of subsurface geophysical structures is crucial. Marine-based seismic data acquisition and processing techniques are used to generate an image of a geophysical structure (subsurface) of the strata underlying the seafloor. This profile does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process.

One of the ways employed to perform marine seismic surveys consists of towing an array of sources and receivers on streamers to generate source signals and receive corresponding reflected signals. The received reflected signals are then analyzed to obtain the data or image of the geophysical area of interest. The arrangement of array of sources and receivers on streamers is usually done at a distance from the vessel that is used for towing. This is because of the high intensity of noise produced by the vessels (such as engine noise, wake, crew and so on is negligible) and to avoid its interference with the received reflected signal on the streamers. However, the array of sources is towed as much as possible closer to the streamers due to the limitations of the length of the power cables, to avoid possible entanglement of cables between the towed source and streamers. This arrangement leads to an offset in the obtained data recorded at the streamer (receiver). The offset hinders the accuracy in the data analysis and thus impairs the image of the geophysical area of interest.

Several mechanisms have been employed currently to address the offset and to minimize the effect on the data to obtain as accurate data analysis as possible. Some of these techniques employ solutions based on obtaining near field data and then using this to obtain a better accuracy of the geophysical area. These solutions still employ a certain amount of distance between the source array and streamers (receivers) and use near field acoustic signals recorded in the vicinity of the source and remaining part of the acoustic signals as an estimate of the zero-offset data.

This method has disadvantages that the data set obtained is not ideally near zero offset and hence not very reliable.

US2011063947A1 discloses obtaining zero offset profile from near field sensors. In this method, two air guns are employed that function as active and inactive sources. If the active air gun array is treated as a single source and the near-field hydrophones associated with the active and inactive air gun arrays are treated as two receiver sets, then each activation of a source array defines two common midpoint locations. One midpoint location is directly below the active air gun array and the other is halfway between the two air gun arrays. Thus, sensor(s) embedded in the active array will record almost exactly zero-offset data, whereas the sensor(s) embedded in the inactive array will record data corresponding to an offset.

WO2009148900A2 discloses a solution for acquiring near zero offset survey data. This method employs a survey source and a first streamer and a second streamer. The survey source is attached to the first streamer and comprising at least one receiver. The first streamer is referred to as a mini streamer and the measurements recorded by the mini streamer are used in data processing algorithm to obtain near zero offset.

EP0066423 discloses a method of using near field and far field array signals to improve signal and data quality. This method uses an array of near-field hydrophones to measure the seismic signals generated by an array of air guns producing seismic signals. Using the signals obtained by the near-field hydrophones, a synthetic source signal derived that is called as a "notional source" and may be used to provide a way of determining the far-field signature of the array of air guns in all angular directions. However, determination of the notional source may be complicated by sea bottom reflections and accurate marine seismic measurements using the methods are confined to deep water seismography and involve complexity.

WO2016076953A1 discloses a method for obtaining near zero offset data in seismic surveys using at least one source and plurality of streamers, each streamer attached to at least one buoy to provide flotation. Further, the method employs an acoustic transmitter at one buoy on at least one of the streamers, which transmits an acoustic signal strong enough to penetrate beneath the water bottom at least 300 m into the subsurface and obtaining near zero-offset data from one or more streamer sensors nearest the at least one acoustic transmitter.

The aforementioned solutions have certain disadvantages as there is sufficient distance between source and streamers in case of near field data obtained. As a result, this is not exactly zero offset data and more of near zero offset data that is obtained. As a result, the data is not fully accurate and may possess some deviations that what normally would be obtained from a zero offset source and streamers. Also, there are redundant reflections that are recorded by the receivers. This may affect the data accuracy and quality of geophysical structure.

In addition, the above-mentioned existing systems employ two or more survey vessels to perform the surveys which makes the solutions complex in nature and involve additional expenses and installations. Also, they are several system components that need to be handled due to several vessels being deployed.

### SUMMARY OF THE INVENTION

In one embodiment, a high-resolution system for marine seismic surveys using towed streamers comprises:
- a first plurality of seismic streamers being suspended from a single marine vessel, using streamer umbilicals;
- a separation system, for separating the first plurality of seismic streamers from each other and where the separation system is connected to the vessel;
- a second plurality of high-resolution seismic streamers suspended from the separation system between the first plurality of seismic streamers and being equidistant from each other;
- a plurality of seismic sources positioned in an interleaved position to the seismic streamers by source umbilicals.

The seismic streamers umbilicals and the seismic sources can in one embodiment be positioned such that heads of all the seismic streamers and the seismic sources have a zero inline offset or a negative inline offset from the marine vessel.

The second plurality of high-resolution streamers are positioned such that the heads of all high-resolution streamers have a common inline offset with the heads of the seismic streamers and seismic sources from the marine vessel.

The source umbilicals can be deployed so that the plurality of seismic sources and second plurality of high-resolution seismic streamers are positioned in a common inline offset from the marine vessel .

The system may further comprise a plurality of deflectors that are configured to control the front end of the system and vary the positioning of the system components on obtaining signals from a control system. The system components may be one or more of the following: seismic streamers, high resolution seismic streamers, seismic source, source float, separation system, streamer umbilical's, source umbilicals.

In one embodiment, the high-resolution seismic streamers may further comprise a higher density of sensor arranged at closer intervals as compared to the seismic streamers.

The seismic streamers may further be configured with at least one vibration isolation module, to arrest the effect of vibrations of the seismic streamers, so that the offset distance to the inline offset of the high- resolution seismic streamer and the seismic streamers is matched.

The seismic streamers may also be configured with at least one streamer seismic head float.

There may be provided a method for providing zero inline or negative inline offset interleaved high resolution data in a marine seismic survey using towed streamers, that comprises the following steps:
- suspending a first plurality of seismic streamers from a vessel using streamer umbilicals,
- separating the first plurality of seismic streamers from each other by a separation system,
- suspending a second plurality of high-resolution seismic streamer from the separation system at an equal distance from each other and positioned between the first plurality of seismic streamers, and
- positioning a plurality of seismic sources in an interleaved manner to the seismic streamers and with a zero inline or negative inline offset to the seismic streamers by source umbilicals.

A matching the inline offset between the first plurality of seismic streamer and the second plurality of high-resolution seismic streamers can be performed by a plurality of deflectors. The deflectors can be connected to the separation system by means of cables.

A matching of the inline offset between the first plurality of seismic streamer, the high resolution seismic streamers and seismic source array can be performed by deflectors connected to the separation system which can adjust the positioning of the system components.

### BREIF DESCRIPTION OF DRAWINGS

The present invention is illustrated in the accompanying drawings, throughout which reference letters indicate corresponding parts in the figures. The invention will be described in further detail with reference to the drawings 1-8, wherein:
Figure 1 illustrates side view of in-water, surface and sub-surface seismic equipment depicting inline and depth separation of the elements of the equipment, according to an embodiment of the invention.
Figure 2 illustrates prior art in-water Seismic Streamer equipment and Seismic Source arrays deployed in a traditional configuration, according to an embodiment.
Figure 3 illustrates aerial view of in-water towed sub-surface seismic streamer, according to an embodiment of the invention.
Figure 4 illustrates in-water Seismic Streamer equipment deployed before the Seismic Source arrays are deployed, prior to the final arrangement shown in figure 3.
Figure 5 illustrates an example of a Seismic Source Array with flexible surface float and subsurface seismic source elements.
Figure 6 is an AFT pictorial view of the Seismic arrangement.
Figure 7 is a forward pictorial view of the Seismic arrangement.
Figure 8 shows a comparison of the data obtained from conventional streamers and the seismic arrangement of the present invention.

The drawings are illustrated as an example, to demonstrate the objective technical problem solved by the invention and do not construe to limit the invention.

### DETAILED DECRIPTION

In the description section, different alternatives and or embodiments will be discussed in more detail with reference to the appended drawings. It should be understood, however, that the drawings are not intended to limit the scope of the invention to the subject-matter depicted in the drawings. Furthermore, even if some of the features are described in relation to the systems only, it is apparent that they are valid for the methods as well, and vice versa.

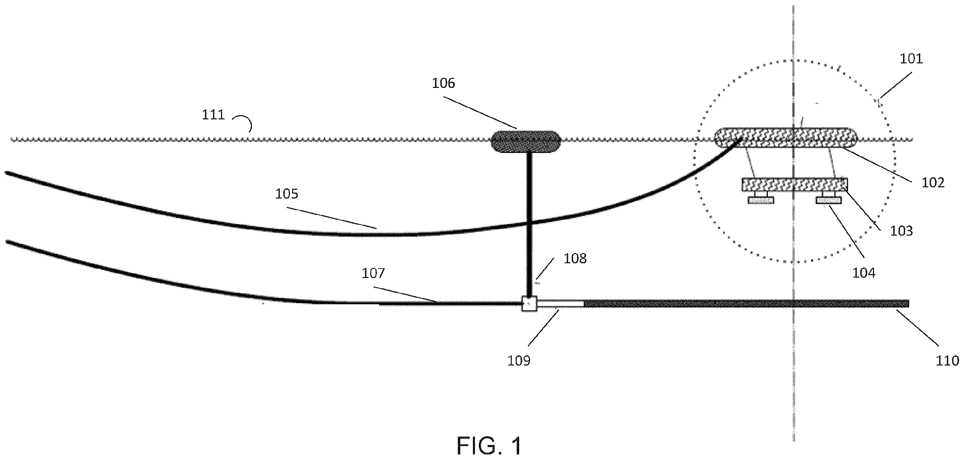

Figure 1 illustrates side view of in-water, surface and sub-surface seismic equipment depicting inline and depth separation of the elements of the equipment, according to an embodiment of the invention. As shown the side view depicts sub-surface seismic equipment arrangement of a single source and streamer sensor. In reality, several such seismic sources and streamer sensors are employed to form the equipment arrangement for towed seismic surveys. The arrangement herein comprises a seismic source 101, a source float 102, sub-surface harness 103, source element 104, source umbilical 105, streamer head float 106, streamer sensor 110, streamer umbilical 107, suspension cable 108 and vibration isolation modules 109. The figure shows the arrangement in relation to the sea surface 111.

The sea surface 111 is utilized to separate the in-water equipment and can be used as a reference point for the vessel. The vessel may be a ship or any such vehicle operating on water surface and having the capability to assist in performing seismic surveys.

The seismic source 101 is illustrated in the figure as enclosed by the dotted circle and represents the source which is employed for sending the signals for performing measurements. Different sources may be employed for conducting seismic surveys such as air guns, or one of various other electrical and/or acoustic impulsive sources. In an embodiment the seismic source 101 is an air gun which is fired to send signals. The signals are reflected and a streamer sensor 110 receives the reflected signals and records them for later processing. A source float 102 is employed for providing buoyance to the seismic source 101 and hold it in position at a distance above the streamer sensor 110. The source element 104 is the main unit of the source that is triggering signals to be sent towards the streamer sensors 110 for example, firing shots in case of air gun. Sub-surface harness 103 is provided to hold in place the components that forms the source together. Also, provided is a source umbilical 105 that connects the seismic source 101 to the vessel which is used for towing the seismic equipment. The source umbilical 105 can also comprise a cable for transmitting control signals between the vessel and the source.

The streamer sensor 110 comprises at least one sensor which basically functions as a receiver to obtain signals from the source and measure these signals which may be employed in determining data on the geographical area of interest. The sensor may be any kind of sensor commonly used in seismic surveys such as hydrophones, geophones, ultrasound sensors, etc.

The streamer sensors 110 are attached to streamer head floats 106 to allow for suspension of the streamers and support them during movement. The floats 106 and streamer sensor 110 are connected by means of suspension cable 108 which is adapted to support bulky streamers and provide support during movements, ie. during towing of the streamer. The length of the suspension cable 108 defines the depth separation between the sea surface and the streamer sensor 110. The streamer 110 is connected to the vessel which tows the streamer 110 for seismic surveys by means of streamer umbilicals 107. The streamer umbilical 107 are similar to the source umbilicals which are made to support the towing of the streamers by the vessel. The streamer umbilical 107 may also comprise a signal cable.

In addition to the arrangement, there is provided vibration isolation modules 109 that attenuate the vibration on the streamer sensors 110 to arrest the effect of vibrations that arise due to movement below the surface and towing from the vessel. These vibrations can be transmitted to the sensor 110 and thus impair the data recorded by the sensors 110 which in turn may result in inaccurate data recording or large offset in the data. The vibration isolation modules 109 will hamper the effect and ensure better accuracy in data.

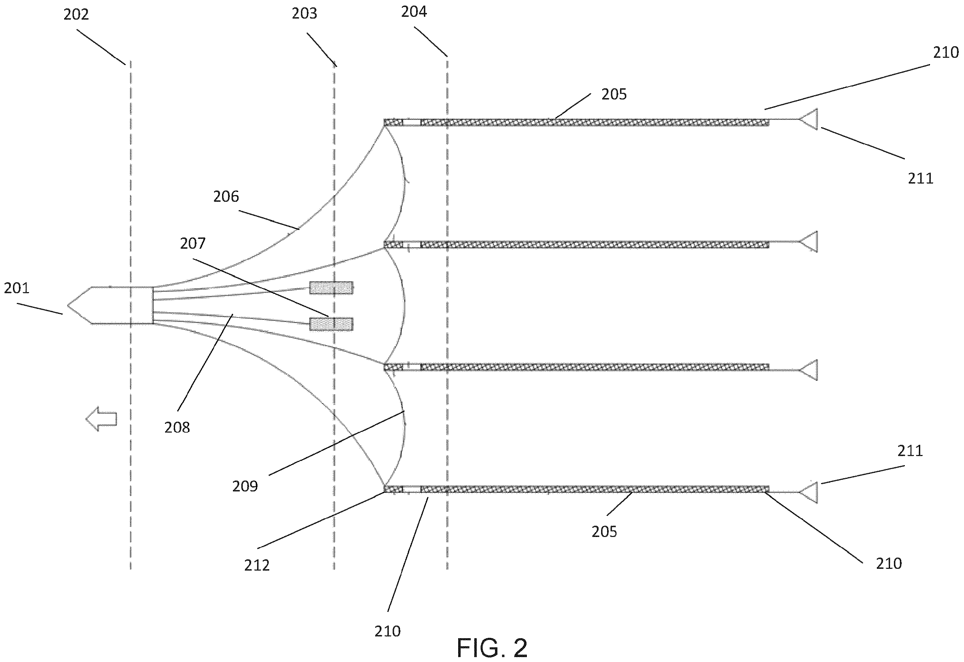

Figure 2 illustrates prior art in-water Seismic Streamer equipment and Seismic Source arrays deployed in a traditional configuration, according to an embodiment. The arrangement in figure 2 is a traditional type of seismic survey equipment that is commonly employed today. This arrangement comprises a plurality of seismic streamers 205 that are arranged at a positive offset from a vessel 201 that is employed for towing the streamers and sources. The seismic streamers 205 are connected from the vessel 201 by means of streamer umbilicals 206. The seismic streamers 205 can employ different types of sensor for measurement of the received signals from the source 207. The source 207 is connected to the vessel 201 by means of source umbilicals 208. Further, the arrangement also comprises a separation system 209 for separating seismic streamers 205 from each other so that they form a system of seismic streamers 205 that trace the path as per the movement of the vessel 201 that is towing the seismic arrangement.

Vibration isolation modules 210 are provided on either sides of the seismic streamer 205 to damp the effect of vibrations on the equipment.
The seismic head floats 212 and tail buoys 211 provide buoyance to the equipment to maintain them afloat during towing.

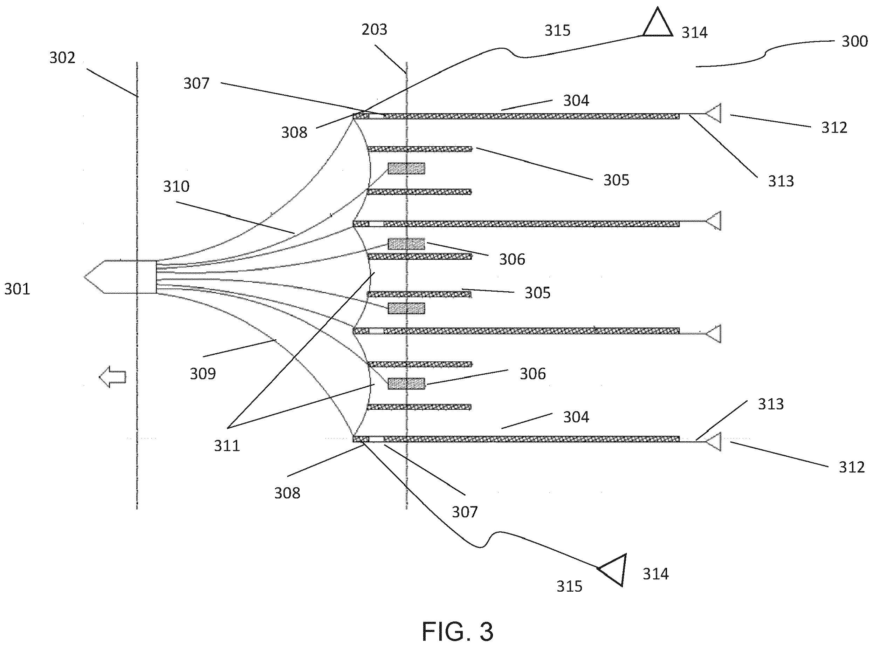

As depicted, the source 207 is arranged at an offset distance from the streamers 205 (receivers). The offset as described this this application refers to the displacement in the traveling direction of the vessel/arrangement in the positioning between a starting point or head of the source and head of the streamers. In this arrangement, the source center 203 and the center of the first sensor of the streamer 204 are not inline. Throughout the description, inline refers to the positional alignment of the center of the first sensor of streamer 204 and the center of the source 203 are the same or in a straight line. In this arrangement, the source 207 is at a considerable positive offset (or arranged ahead) from the seismic streamers 205 and their corresponding receivers. This arrangement is done in order to avoid the interference signals and noise generated by the vessel 201 (engine, crew etc) from affecting the streamer sensors 205. A major drawback associated with this arrangement is that there is huge positive data offset obtained on the received data at the streamer sensors 205 and hence the data obtained is not accurate. To overcome the disadvantages of the arrangement in figure 2 is the objective of the present invention and this will be described in greater detail in figure 3.

Figure 3 illustrates aerial view of in-water towed sub-surface seismic streamer, according to an embodiment of the invention. The high resolution seismic system 300 arrangement herein comprises a plurality of seismic streamers 304, a second plurality of high resolution seismic streamers 305, streamer umbilicals 309, source umbilicals 310, separation system 311, vibration isolation modules 307, 313, seismic tail buoy 312, seismic head floats 308 being towed by the vessel 301, plurality of deflectors 314 connected to the separation system 311 by means of cables 315. The vessel 301 may be any type of marine vessel which facilitates marine seismic surveys such as ships. An important aspect of this system 300 is that a single vessel 301 may be employed for towing the entire system.

The vessel 301 which tows the equipment is connected to the plurality of seismic streamers 304 which comprise sensors arranged on them to function as receivers. The seismic streamers 304 are connected to the vessel 301 by means of streamer umbilicals 309. The streamer umbilicals 309 are strong enough to facilitate towing of the streamers such that the seismic streamer 304 are maintained inline with one and another. The center of the first/front sensors on the seismic streamers 304 are aligned and have the same inline offset from the vessel 301. The seismic streamers 304 may vary in length from 2 km to 12 km depending on the equipment they are employed on.

The seismic streamers 304 or also referred to as streamer sensors are arranged side-by-side separated from each other (aligned by their heads and centers) by means of a separation system 311. Further, the seismic streamers 304 comprise of several sensors which are separated inline from each other and with respective to the sensors on the neighboring seismic streamers 304. This separation system 311 basically hold the seismic streamers together as a system while maintaining their movement when being towed. The separation system 311 may comprise cables that allow power to the separation system and data transmission from the separation system. The data may be transferred so that the signals obtained from the seismic streamers, high resolution streamers and source arrays can be further processed by a computer system located remotely for example on the vessel or be stored for later processing. In implementations, usually the separation system cables are also coupled with rope or other components that can take the load or the tension off the cables this compensates for stretch or electrical damages that could occur.

The deflectors 314 are attached to the separation system 311 by means of cables 315 that lead from the deflectors. The main role of the deflectors 314 is to maintain the entire arrangement in position during the towing by the vessel 301. The deflectors 314 function as controllable front end of the system which can be also controlled by means of a control system configured to be in communication with and instruct the deflectors to move as determined.

The high-resolution seismic streamers 305 are special type of seismic streamers 305 that are provided in addition to the seismic streamers 304. The high-resolution seismic streamers 305 comprise a closer arrangement of sensors on them as compared to the seismic streamer 304. The number and density of the sensors is larger on the high-resolution seismic streamers 305 as compared to the normal seismic streamers 304 and thus help in achieving greater efficiency in terms of recording signals. The high-resolution seismic streamers 305 are suspended in an interleaved manner in between the seismic streamers 304. In this example there are arranged two high-resolution streamers 305 between each of the seismic streamers 304, but the numbers and ratio between the different streamer types may vary according to the specific survey to be run. The high-resolution seismic streamers 305 are connected to the separation system 311 and further connects to the streamer umbilicals (more specifically, the lead in cables from the streamer) to the vessel 301 as shown in the figure 3. The connection also collects and transmits the data via the separation system cables. The high-resolution seismic streamers 305 are highly sensitive in recording the received signals on their receivers (receiver sensors). Also, due to the fact that high-resolution seismic streamers 305 record an additional data set, the data on the geographical area to be monitored by this seismic arrangement is more accurate and reliable.

A plurality of seismic sources 306 in the form of source arrays are suspended in between the seismic streamers 304 and high-resolution seismic streamers 305. The seismic sources 306 are connected by means of source umbilicals 310 to the vessel 301 that tows the equipment. The seismic sources 306 are suspended such that the center of the source and the center of the first sensor on the seismic streamer 304 and the high-resolution seismic streamer 305 are aligned or have zero/common offset from the vessel reference point 302. This arrangement of the streamers and sources ensures that the signals transmitted by the source are then received on the receiver sensors on the seismic streamers are not affected by the positioning of the streamers and sources which may further add to offset in the data. Thus, this ensures the data obtained is more accurate as compared to the traditional systems of figure 2.

The system 300 is also provided with vibration isolation modules 307, 313 that dampen the effect of the waves and other sea conditions from affecting the data recorded on the streamer sensors. For example, the vibration isolation modules 307, 311 keep the affect of the high tides and harsh sea conditions from affecting the data on the receiver sensors during towing. The vibration isolation modules 307, 313 may vary in length depending on the streamers they are employed on, and may be individually adapted to ensure that the sensors on the streamers are aligned as described above. As an example the length employed may be approximately 25m for the application as described herein.

Seismic head floats 308 and seismic tail buoys 312 keep the streamers afloat during towing and recording data. The Seismic head floats 308 and seismic tail buoys 312 can for example be Surface Floats of 1000-2000 Ltr capacity. However, these may be different as per the requirement of the equipment's they are employed on.

In an embodiment, the deflectors 314 comprise means for controlling the relative positioning of the high-resolution system 300 to position the different components according to a plan and keep it intact and in place even due harsh environment conditions of towing such as strong winds, strong currents and/or high tides. The deflectors 314 also enable repetitive measurements to be performed periodically for example, one every year, once in two years and so on. For this aspect, it is important that high resolution system setup is relatively intact and not disturbed due to the sea conditions. The deflector 314 can be configured to maintain the system and its components in position. The deflectors 314 may also pull out system components when required. This also helps in maintaining the drag during towing of the streamers and thus improves overall fuel efficiency.
In another embodiment, the deflector 314 may be connected and in communication to a control system on the vessel 301 or externally to control the positioning of the system under the signals of the control system.

In an embodiment, the seismic head floats 308 may also control means for controlling their position and may be connected and in communication with the control system and the deflector 314 to change the position of the seismic head floats 308 as desired.

Further, the signals obtained from the high-resolution seismic system 300 components such as seismic streamers 304, high-resolution streamers 305, seismic source array 306 may be transmitted either via the system umbilicals or the separation system cables that may be capable of transmitting signals to a processor located remotely for example on the vessel or another remote location different from the system set-up. The transmitted signals may be processed by a computer to obtain the data on the geographical mapping of the layers beneath the sea surface.

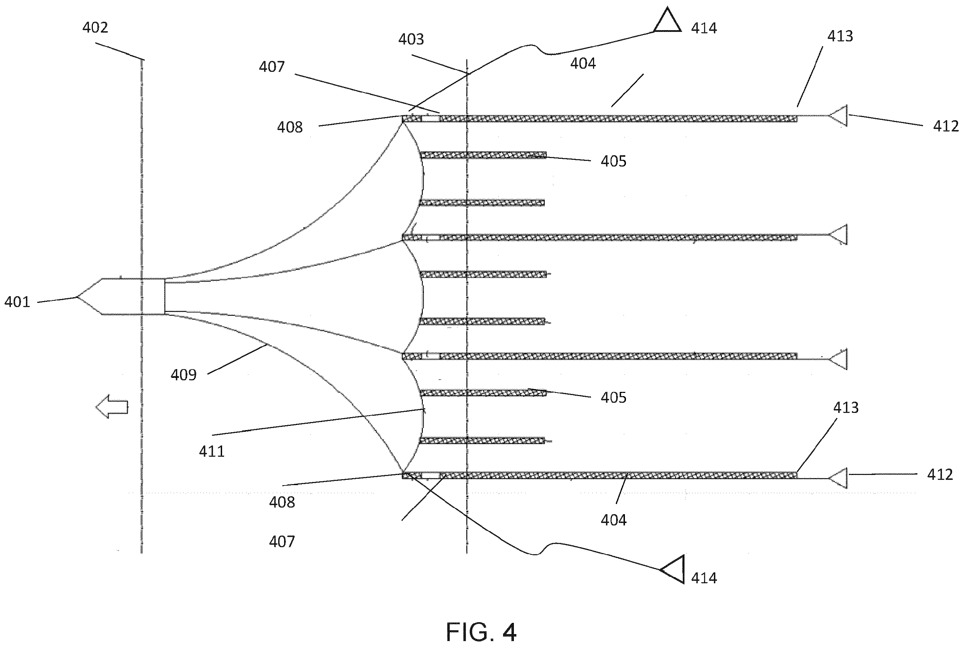

Figure 4 illustrates in-water Seismic Streamer equipment before the Seismic Source arrays are deployed, ie. prior to the final arrangement shown in figure 3, according to an embodiment of the invention. Depicted herein is the steps involved in arrangement of streamers. The set of main seismic streamers 404 are suspended from the vessel 401 by means of streamer umbilicals 409. The seismic streamers 404 are suspended such that the heads of the seismic streamers are aligned with each other and have a common offset from the vessel that is towing the seismic streamers 404. A separation system 411 separates the seismic streamers 404 from each other and ensures they are in-line from the vessel reference point. The separation system 411 ensures a contracted common acquisition profile, usually 50-150m in length.

Further, a plurality of additional high-resolution seismic streamers 405 are suspended from the separation system 411 laterally equidistant from each other and arranged in between the main seismic streamers 404 such that the catenary sag produced by the forwards water flow provides an even inline offset of the streamers from the vessel 401.

The offset of the Seismic Streamers 404 can be adjusted by using custom length Vibration Isolation Modules 407 such that the offset to the head of the high-resolution seismic streamers 405 and the Seismic Streamers 404 is matched. Seismic head float 408 and seismic tail buoy 412 ensure streamers are afloat at the desired depth.

In an embodiment of the invention, once the streamer systems have been deployed the Seismic source array (not shown in figure 4) can be positioned between the seismic streamers 404 and with a zero inline offset to the streamers 404 as they have a shallower profile and are unobstructed by the Seismic Streamer Head Floats 408 as the high-resolution seismic streamers 405 are suspended without streamer head floats. This leads to an arrangement for example like the arrangement illustrated in figure 3.

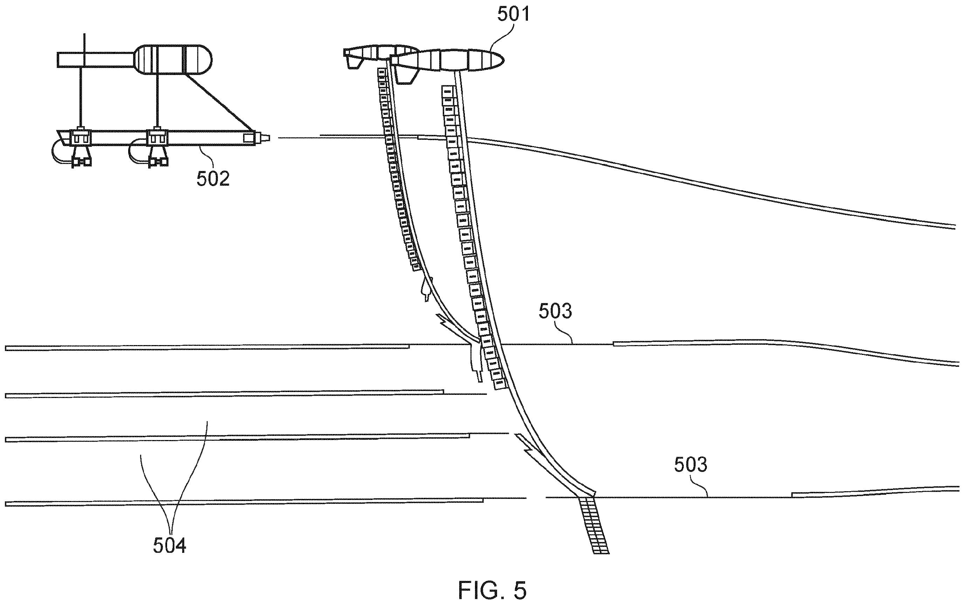

Figure 5 illustrates an example of a Seismic Source Array with flexible surface float and subsurface seismic source elements. The figure herein illustrates a side view of a 6M long seismic source array 502 with flexible surface float 501 and subsurface seismic source elements. The source arrays can comprise different types of sources such an Air gun, plasma sound source, electromagnetic Pulse Energy Source, Seismic vibrator and so on.
The surface float 501 is flexible and can be suspended to the seismic source arrays 502 to keep them afloat during towing. The seismic streamers 503 and high-resolution streamers 504 are the same as that described in figure 3.

The seismic source array 502 of the figure 5 system can be suspended to the equipment as described in figure 4 to form a system for seismic surveys as in figure 3.

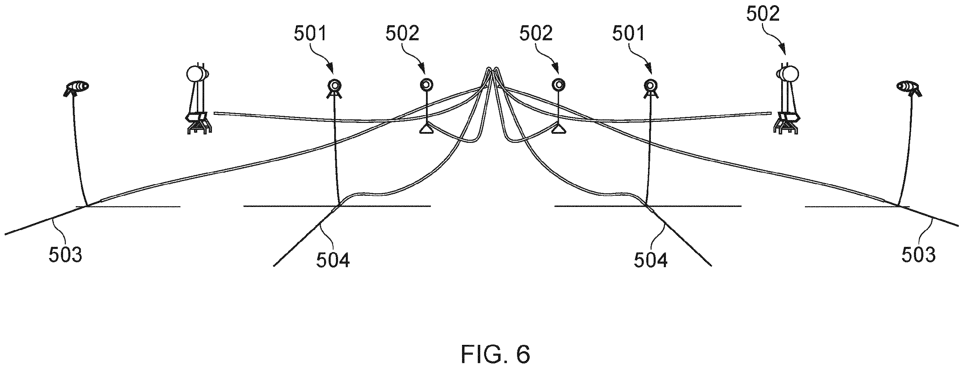

Figure 6 is an aft pictorial view of the Seismic arrangement of figure 3. The aft view from the marine vessel of survey depicts the arrangement of the equipment comprising plurality of seismic source arrays 502 and their corresponding flexible surface float 501, seismic streamers 203 and high-resolution streamers 504. The seismic sources 502 may be 6M long source array or as per the requirements of the seismic surveys provided on the sub-surface.

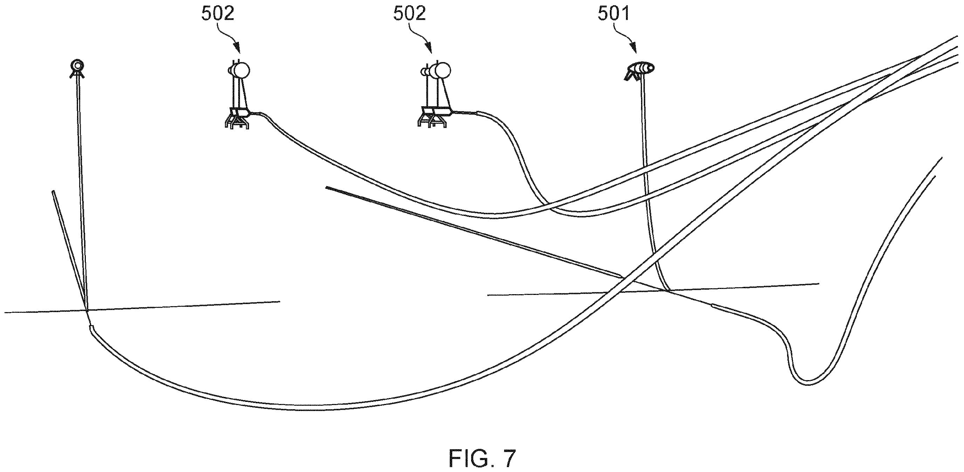

Figure 7 is a forward pictorial view of the Seismic arrangement of figure 3. The forward view as seen from the towing vessel comprising seismic source arrays 502 being towed by the vessel. The seismic source arrays 502 are connected to flexible seismic floats 501. The seismic source array 502 further comprise of subsurface elements below the water.

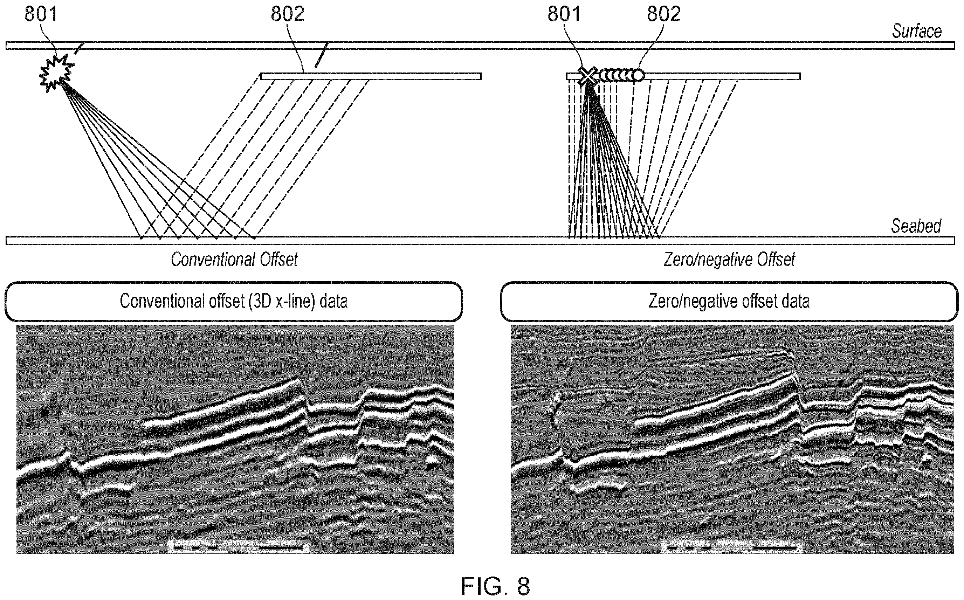

Figure 8 shows a comparison of the data obtained from conventional streamers and the seismic arrangement of the present invention. As seen in the illustration conventional streamer arrangement is shown in the left side of the figure against the seismic system arrangement of the present invention on the right side. In conventional streamer arrangements the source 801 is placed ahead of the seismic streamer (receiver) 802 and thus the data received on the receiver suffers from low resolution and lesser data sampling in 3D data obtained. In case of the implementation presented herein, wherein the source 801 is placed in-line or has a common beginning point with the seismic streamer (receiver) 802, it is observed that the data is improved significantly in resolution and details. In an example, simulations have demonstrated that there have been 4x more data sampling in space and time.

## Claims

1. A high-resolution system (300) for marine seismic surveys using towed streamers, the system comprising:
- a first plurality of seismic streamers (304) being suspended from a single marine vessel (301), using streamer umbilicals (309);
- a separation system (311), for separating the first plurality of seismic streamers (304) from each other and where the separation system is connected to the vessel;
- a second plurality of high-resolution seismic streamers (305) suspended from the separation system (311) between the first plurality of seismic streamers (304) and being equidistant from each other;
- a plurality of seismic sources (306) positioned in an interleaved position to the seismic streamers (304) by source umbilicals (310) for transmitting seismic signals to the seismic streamers (304, 305).

2. The high-resolution system (300) as in claim 1, wherein the seismic sources (306) are suspended such that the center of the source and the center of the first sensor on the first plurality of seismic streamers (304) and the center of the first sensor on the second plurality of high-resolution seismic streamers (305) have common zero or negative inline offset.

3. The high-resolution system (300) as in claim 1, wherein the seismic streamers (304) and the seismic sources (306) are positioned such that heads of all the seismic streamers (304) and the seismic sources (306) have a zero inline offset or a negative inline offset from the marine vessel (301).

4. The high-resolution system (300) as in claim 1, wherein the second plurality of high-resolution streamers (305) are positioned such that the heads of all high-resolution streamers have a common inline offset with the heads of the seismic streamers (304) and seismic sources (360) from the marine vessel (301).

5. The high-resolution system (300) as in claim 1, wherein the source umbilicals (310) are deployed so that the plurality of seismic sources (306) and second plurality of high-resolution seismic streamers (305) are positioned in a common inline offset from the marine vessel (301).

6. The high-resolution system (300) as in claim 1, wherein the system further comprises deflectors (314) that are configured to control the front end of the system and vary the positioning of the system components on obtaining signals from a control system.

7. The high-resolution system (300) as in claim 6, wherein the system components comprise at least one of: seismic streamers (304), high resolution seismic streamers (305), seismic source (306), source float (102), separation system (311), streamer umbilical's (309), source umbilicals (310).

8. The high-resolution system (300) as in claim 1, wherein the high-resolution seismic streamers (305) comprise a higher density of sensor arranged at closer intervals as compared to the seismic streamers.

9. The high-resolution system as in claim 1, wherein the seismic streamers are configured with at least one vibration isolation module (307, 313) on it to arrest the effect of vibrations of the seismic streamers, so that the offset distance to the head of the high-resolution seismic streamer (305) and the seismic streamers (304) is matched.

10. The high-resolution system as in claim 1, wherein the seismic streamers are configured with at least one seismic head float (308).

11. A method for providing zero inline or negative inline offset interleaved high resolution data in a marine seismic survey using towed streamers, the method comprising:
- suspending a first plurality of seismic streamers (304) from a vessel (301) using streamer umbilicals (309);
- separating the first plurality of seismic streamers (304) from each other by a separation system (311),
- suspending a second plurality of high-resolution seismic streamer (305) from the separation system (311) at an equal distance from each other and positioned between the first plurality of seismic streamers (304); and
- positioning a plurality of seismic sources (306) in an interleaved manner to the seismic streamers (304) by source umbilicals (310) for transmitting seismic signals to the seismic streamers (304, 305).

12. The method as in claim 11, where the seismic sources (306) are suspended such that the center of the source and the center of the first sensor on the first plurality of seismic streamers (304) and the center of the first sensor on the second plurality of high-resolution seismic streamers (305) are have common zero or negative inline offset.

13. The method as in claim 11, comprising matching the inline offset between the first plurality of seismic streamer (304) and the second plurality of high-resolution seismic streamers (305) by a plurality of deflectors (314) connected to the separation system (311) by means of cables (315).

14. The method as in claim 13, comprising matching of the inline offset between the first plurality of seismic streamer (304), the high resolution seismic streamers and seismic source array (306) by deflectors (314) connected to the separation system by adjusting the positioning of the system components.
